# EUROPÄISCHE PATENTANMELDUNG

(11) **EP 2 261 621 A2**
(43) Veröffentlichungstag der Anmeldung: **15.12.2010**
(21) Anmeldenummer: 10183404.2
(22) Anmeldetag: 22.05.2002
(51) Int. Cl.: G01K 1/02, G01K 1/14

(54) **Thermisch speisbarer Sender und Sensorsystem**

(30) Priorität: 22.05.2001 DE 10125058
(62) Teilanmeldung aus: 02747158.0
(71) Anmelder: EnOcean GmbH, 82041 Oberhaching (DE)
(72) Erfinder: Albsmeier, Andre, 81479 München (DE); Bulst, Wolf-Eckhart, 81739 München (DE); Pistor, Klaus, 83623 Dietramszell-Linden (DE); Schmidt, Frank, 82054 Altkirchen (DE); Sczesny, Oliver, 85609 Aschheim (DE); Seisenberger, Claus, 84181 Neufrannhofen (DE); Vossiek, Martin, 31139 Hildesheim (DE)
(74) Vertreter: Hermann, Uwe

(57) **Zusammenfassung**

Die Erfindung betrifft einen thermisch speisbaren Sender, welcher mindestens ein Wärmewandlerelement (1) mit nachgeschaltetem Spannungswandler (3) und einer Logikbaugruppe (4) sowie einer Datenübertragungseinheit (5, 6) aufweist. Der Sender ist **dadurch gekennzeichnet, dass** die Logikbaugruppe (4) in ULP-Bauweise (ultra low power) ausgeführt ist und die Datenübertragungseinheit (5, 6) ein breitbandiges Signal abstrahlt.

Ferner betrifft die Erfindung ein System zur Überwachung und/oder Steuerung mit mindestens einem Sender der vorgenannten Art sowie mindestens einer Einheit zur Anzeige der von dem mindestens einen Sender ausgesandten Daten und/oder zur Steuerung mindestens einer der von dem Sender überwachten Vorrichtungen aufgrund der empfangenen Daten.

Ein derartiger Sender oder ein entsprechendes System werden bevorzugt zur Steuerung elektrischer Anlagen oder Vorrichtungen, insbesondere in der Gebäudetechnik, der Installationstechnik, zur Heizungsregelung oder in Haushaltsgeräten eingesetzt.

## Beschreibung

Die Erfindung betrifft einen thermisch gespeisten Sender, ein System zur Überwachung und/oder Steuerung, sowie die Verwendung eines entsprechenden Senders oder Systems.

Beispielsweise aus DE 36 43 236 C2 sind Systeme bekannt, bei denen mechanische in elektrische Energie umgewandelt und danach gleichgerichtet wird. Diese elektrische Energie wird dazu verwendet, einfache Schwingkreise anzusteuern.

In WO 98/36395 wird eine Methode zur Erzeugung kodierter Hochfrequenzsignale beschrieben, bei der Wärmeenergie in elektrische Energie umgewandelt wird, und die niederfrequente elektrische Energie über ein Element mit nichtlinearer Kennlinie in hochfrequente elektrische Energie umgewandelt wird. Diese hochfrequente Energie wird verwendet, um ein schmalbandiges Hochfrequenzsignal auszusenden, welches spezifische Informationen enthält.

Im Datenblatt zur "Funkfernsteuerung Alpha Radio "sind typische Betriebsdaten einer tragbaren Funkfernsteuerung aufgeführt.

Es ist die Aufgabe der vorliegenden Erfindung, eine Möglichkeit zur Informationsübermittlung bei geringen Aktivierungsenergien und erhöhter Informationsdichte bereitzustellen, wodurch insbesondere die Informationsübermittlung in elektrischen Anlagen verbessert werden kann.

Diese Aufgabe wird mittels eines thermisch gespeisten Senders nach Anspruch 1, eines Systems nach Anspruch 10 und einer Verwendung nach Anspruch 11 gelöst.

Dazu weist der Sender mindestens ein Wärmewandlerelement mit nachgeschaltetem Spannungswandler auf. Mittels des Spannungswandlers wird sichergestellt, dass zumindest über einen kurzen Zeitraum eine im Wesentlichen konstante Spannung abgreifbar ist. Dadurch werden Spannungsspitzen vermieden und die Betriebssicherheit erhöht.

Mit dem Spannungswandler verbunden ist eine Logikbaugruppe in ULP- ("Ultra Low Power"= Geringstverbrauch)-Bauweise, worunter bevorzugt eine Leistungsaufnahme von weniger als ungefähr 15 mW, insbesondere weniger als 10 mW verstanden wird. Besonders günstig ist eine Leistungsaufnahme zwischen 3 mW und 8 mW. Die Logikbaugruppe beinhaltet mindestens eine Ablaufsteuerung zur Steuerung der Sendestufe. Mit der Logikbaugruppe ist eine Datenübertragungseinheit verbunden, welche von der Logikbaugruppe gesteuert wird.

Die von der Datenübertragungseinheit erzeugten Signale sind im Gegensatz zu bisherigen Methoden, wie z. B. in WO 98/36395 oder "Funkfernsteuerung Alpha Radio" beschrieben, breitbandig. Dadurch ergibt sich der Vorteil, dass zwar der Energieverbrauch pro Zeiteinheit höher ist als bei schmalbandiger Abstrahlung, aber auch mehr Informationen pro Zeiteinheit übertragen werden können, so dass im Ergebnis eine höhere Datenübertragungsrate und ein geringerer Energieverbrauch möglich ist. Dies ist insbesondere wichtig bei nur kleinen nutzbaren Energiemengen wie z. B. Temperaturgradienten.

Es wird bevorzugt, wenn mindestens ein Wärmewandlerelement ein thermoelektrischer Wandler ("Thermowandler") ist, mittels dessen Wärmeenergie in elektrische Energie nach dem thermoelektrischen Prinzip umwandelbar ist. Dieser nutzt eine räumliche Temperaturdifferenz zur Erzeugung der Spannung. Dazu wird er typischerweise auf einer Seite mit einem wärmetragenden Teil, auf der anderen Seite (eventuell über eine Hilfsvorrichtung wie einen Kühlkörper KK) mit der Umgebung thermisch verbunden. Warm- und Kaltseite können immer vertauscht werden.

Gibt es in der Messumgebung keine nutzbare räumliche Temperaturdifferenz, ist es günstig, wenn mindestens ein Wärmewandlerelement ein Pyrowandler ist, mittels dessen Wärmeenergie in elektrische Energie nach dem pyroelektrischen Prinzip umwandelbar ist, bei dem eine zeitliche Änderung der Temperatur in eine elektrische Spannung umgesetzt wird.

Die Energieversorgung kann günstigerweise durch den zusätzlichen Einsatz von Solarzellen unterstützt werden. Auf diese Weise ist auch ein Betrieb des Senders möglich, wenn keine ausreichende Temperaturdifferenz zur Verfügung steht, jedoch eine ausreichende Lichtstärke. Aufgrund der besonders leistungsarmen Konzeption des Senders können besonders kleine und kostengünstige photovoltaische Elemente verwendet werden.

Zur Erhöhung des Wirkungsgrads ist es günstig, wenn der Spannungswandler mit einem weiteren Energiespeicherelement, vorzugsweise einer Induktivität, ausgerüstet ist. Insbesondere ist dies günstig, wenn die Spannungswandlerschaltung getaktet betrieben wird.

Zur Spannungsstabilisierung wird bevorzugt ein Spannungswandler mit hohem Wirkungsgrad und hoher Eingangsspannungsdynamik nach dem Stand der Technik eingesetzt. Sinkt die Ladespannung am Kondensator im Betrieb dann z. B. von 20 V auf 5 V ab, stellt eine Stabilisierungsschaltung am Ausgang konstant 3 V zur Verfügung.

Zur stromsparenden Betriebsweise ist die Logikbaugruppe vorteilhafterweise so ausgelegt, dass alle Funktionen zeitlich so kurz wie möglich betrieben werden ("Energie-Management"), insbesondere im Bereich von Millisekunden, insbesondere für eine Aktivitätsdauer zwischen 0,3 ms und 5 ms, bevorzugt zwischen 0,5 ms und 2 ms.

Zur erhöhten Datensicherheit ist es vorteilhaft, wenn die Logikbaugruppe mit einem Speicher verbunden ist, in dem ein Identifikationscode gespeichert ist. Beispielsweise kann dieser Speicher in die Logikbaugruppe integriert sein.

Es ist auch zum zuverlässigen Betrieb der Logikbaugruppe vorteilhaft, wenn dieser mindestens eine Gleichrichterschaltung vorgeschaltet ist. Insbesondere ist die Gleichrichterschaltung dem Spannungswandler vorgeschaltet und dem Wärmewandlerelement nachgeschaltet. Die Verbindung zwischen Gleichrichter und Spannungswandler kann direkt geschehen oder über ein zusätzlich vorhandenes Stromspeicherelement, z. B. einen Kondensator oder Akkumulator mit zugehöriger Schaltung. Somit ist die vom Wärmewandlerelement ausgegebene elektrische Energie in mindestens einem Stromspeicherelement, insbesondere einem Kondensator oder Akkumulator, speicherbar. Da die generierten Ströme sehr klein sind, ist eine äußerst stromsparende Schaltung notwendig. (Vergleiche Erfindungsmeldung Thermischer Spannungsgenerator). Bei Vorhandensein eines Kondensators ist beispielsweise durch einen nachgeschalteten Spannungswandler eine typischerweise exponentiell abfallende Ladespannung des Kondensators zumindest kurzfristig in eine konstante Spannung umwandelbar.

Das Wärmewandlerelement kann auch selbst die elektrischen Spannungen speichern. Durch das Stromspeicherelement wird eine ausreichend lange Energieversorgung zur Sendung der Informationen gewährleistet.

Ist ein ausreichendes Spannungssignal zur Energieversorgung der Logikbaugruppe vorhanden, so übermittelt die Logikbaugruppe Daten, z. B. einen Identifikationscode und Sensormesssignale, an die Datenübertragungseinheit. Von dieser wird ein Sendetelegramm generiert, das die zu übertragenden Daten enthält, und breitbandig abgestrahlt.

Es wird bevorzugt, wenn die Logikbaugruppe mit mindestens einem Sensor verbunden ist. Von der Logikbaugruppe können dann auch Messdaten des mindestens einen Sensors erfasst bzw. ausgelesen und dem Sendetelegramm aufgeprägt werden. Die Logikbaugruppe kann einen oder mehrere Sensoren abfragen. Bevorzugt ist der mindestens eine Sensor ein akkumulierender Sensor, bei dem durch den Energieübertrag ein über die Zeit integrierender Messwert detektiert wird. Die Wahl der Sensoren ist nicht be- schränkt ; z. B. können Temperatursensoren, Kraftsensoren (Druck, Gewicht, Drehmoment usw.), Zählerstandssensoren oder Schalterzustandssensoren angeschlossen werden. In der Logikbaugruppe können die Messdaten aber auch in einer anderen Art verarbeitet, z. B. digitalisiert, werden.

Es ist vorteilhaft, wenn die Logikbaugruppe einen Mikroprozessor oder einen ASIC-Baustein enthält.

Typischerweise wird ein Teil der vom Wärmewandlerelement bereitgestellten elektrischen Energie dazu verwendet, die Logikbaugruppe in einen Betriebszustand hochzufahren. Dazu ist üblicherweise ein Schwingquarz als Taktgeber vorgesehen. Es ist zur Verkürzung der Zeit zum Hochfahren der Logikbaugruppe günstig, wenn statt eines Schwingquarzes ein LC-Schwingkreis oder ein RC-Schwingkreis als Taktgeber vorhanden ist.

Die Datenübertragungseinheit weist vorzugsweise eine Sendestufe und eine Sendeantenne auf. Die Sendestufe ist bevorzugt eine Hochfrequenzsendestufe. Zur Erreichung einer hohen Datenübertragungsrate ist es vorteilhaft, wenn mittels der Sendestufe der Datenübertragungseinrichtung ein Signal, insbesondere ein Hochfrequenzsignal mit einer Frequenz f > 1 MHz gesendet wird. Heutzutage technisch realisiert werden z. B. Frequenzen f zwischen 100 MHz und 30 GHz. Vorteilhafte Frequenzbereiche sind Bänder bei 433 MHz, 868 MHz, 2450 MHz (+915) und/oder bei 5,8 GHz bzw. 24 GHz. Es besteht keine prinzipielle obere Grenze für die Frequenz.

Zur Erreichung eines hohen Datendurchsatzes innerhalb einer kurzen Zeit ist es vorteilhaft, wenn die Bandbreite des gesendeten Signals mindestens 100 kHz, insbesondere zwischen 300 kHz und 600 kHz, beträgt. Die übertragene Bruttodatenmenge beträgt vorzugsweise 32 bit bis 512 bit.

Ebenfalls günstig ist eine Sendezeit von weniger als 3 ms, insbesondere zwischen 0,5 ms und 2 ms. Dies wird in einem Verfahren zum Betrieb eines Senders bevorzugt dadurch erreicht, dass ein Sendetelegramm innerhalb eines Zeitraums von 0,3 ms bis 5 ms, insbesondere zwischen 0,5 ms und 2 ms, abgestrahlt wird.

Vorzugsweise arbeitet die Datenübertragungseinheit mit einem OFW-Resonator als frequenzbestimmendem Bauteil.

Bevorzugt wird ein fehlertolerantes Übertragungsverfahren, insbesondere unter Verwendung der sog. Forward-Error-Correction oder eines blockorientierten Redundanzverfahrens. Günstig ist ebenfalls eine Übertragung der Daten in sehr kurzer Zeit zum Kollisionsschutz bei mehreren Senders im Empfangsbereich einer Auswerteelektronik.

Es ist bei einer ausreichend langzeitigen Spannungsversorgung vorteilhaft, wenn mehrere Sendetelegramme vollständig mehrmals hintereinander abgestrahlt werden, weil so eine erhöhte Übermittlungssicherheit geschaffen wird.

Es ist zur erhöhten Abhörsicherheit vorteilhaft, wenn das Sendetelegramm verschlüsselt wird, typischerweise durch eine in die Logikbaugruppe integrierte Verschlüsselungslogik. Dadurch ist es auch möglich, die Übertragungssicherheit durch Eingabe individueller Schlüssel zu erhöhen, beispielsweise zur Zutrittskontrolle. Insbesondere ist es beim Senden mehrerer Sendetelegramme günstig, wenn jedes der Hochfrequenzsignale unterschiedlich verschlüsselt ist, z. B. mit einem unterschiedlichen Schlüssel.

Auch ist es zur Unterdrückung einer Übertragungsstörung günstig, wenn in einem Verfahren zum Betrieb des Senders beim Senden mehrerer Sendetelegramme ihr zeitlicher Abstand zueinander variabel ist und/oder ihre Frequenz variabel einstellbar oder verschieden ist.

Ebenfalls zur erhöhten Übertragungssicherheit, insbesondere in Umgebungen mit mehreren Sendern, ist es vorteilhaft, wenn die Abstrahlung des Sendetelegramms zeitverzögert wird, beispielsweise durch variable, z. B. statistische, Einstellung einer Verzögerung. Bevorzugt ist zwischen der Logikbaugruppe und der Sendeantenne der Datenübertragungseinheit dazu eine Verzögerungsvorrichtung vorhanden. Die Verzögerung bzw. die Verzögerungsvorrichtung ist beispielsweise in der Software der Logikbaugruppe realisierbar.

Es wird bevorzugt, wenn die Logikbaugruppe während eines Sendezyklus mindestens
- den Identifikationscode ausliest, beispielsweise aus einem Speicher der Logikbaugruppe;
- ein Sendetelegramm generiert, welches mindestens den Identifikationscode und gegebenenfalls andere Informationen; beispielsweise Messdaten von Sensoren, enthält;
- die Datenübertragungseinheit aktiviert und darüber das Sendetelegramm, gegebenenfalls verschlüsselt und/oder zeitverzögert, aussendet.

Der thermisch speisbare Sender ist unter anderem vorteilhaft einsetzbar in:
- Temperatursensoren zur Heizkostenverteilung;
- Temperatursensoren im Haushalt, insbesondere in Kochgeschirren, Herden, Kühlschränken, Haushaltgeräten;
- Sensoren im Automobil und anderen Verkehrsmitteln;
- Temperatursensoren und andere thermisch betriebene Sensoren in der Industrie an Maschinen, Anlagen, Fahrzeugen usw.

Er ist auch vorteilhaft einsetzbar in der Gebäudetechnik, insbesondere der Installationstechnik, zum Beispiel zur Steuerung elektrischer Anlagen oder zur Zugangskontrolle.

Die Liste der Anwendungen ist nicht vollständig; der Sender ist vielmehr universell einsetzbar.

Im Folgenden werden einzelne Gesichtspunkte des Senders näher beschrieben. Selbstverständlich ist der Sender nicht auf diese Beispiele beschränkt.

### a) Energiebetrachtung

Die elektrische Energie im Wandler sei : E = ½ C·U² = ½ 50·10-9·50² [V² As/V] = 62,5 µWs, davon bleiben bei 80% Wirkungsgrad des Wandlers ca. 50 µWs übrig. Damit kann eine elektronische Schaltung, die z. B. ca. 20 mW (3 V und 6,6 mA) benötigt, für eine Zeitdauer von t = 50 µWs/20mW = 2,5 ms betrieben werden. Somit ist auch bei geringer Energie der kurzzeitige Betrieb der Logikbaugruppe und der Datenübertragungseinheit möglich

### b) Datenübertragung

### i) Übertragungsrate und Datenmenge

Wird eine Modulationsrate der Datenübertragungseinheit in Form eines Hochfrequenzsenders von 100 Kbit/s vorausgesetzt, so können in dieser Zeit Daten mit einem Umfang von ca. 250 Bit ausgesendet werden. Diese Datenmenge reicht für eine Verschlüsselung aus und bietet auch die Möglichkeit, die Übertragungssicherheit durch mehrmaliges Aussenden oder die Anwendung von Korrelationsverfahren zu erhöhen.

### c) Datenübertragungseinheit

Um innerhalb einer privaten Wohnung Daten sicher zu jedem Punkt zu senden, wird eine Leistung von 1 mW bis 50 mW zugrunde gelegt (bei einem Hochfrequenzsender). Dabei ist es ein typisches Szenario, dass die Sendetelegramme alle Sender von einem einzigen Empfänger empfangen werden, welcher die entsprechenden Aktionen (z. B. Heizung regeln) einleitet.

### d) Empfangssystem

Das Empfangssystem weist typischerweise einen Empfänger und eine prozessorbasierte Signalverarbeitungseinheit auf. Es empfängt die vom Sender ausgesandten Sendetelegramme, die zwischengespeichert und verarbeitet werden. Das Empfangssystem kann mit einem oder mehreren Senders zu einem System gekoppelt werden.

Vorzugsweise ist das Empfangssystem an ein"Power Line Communication"- ("PLC"-) Modem angeschlossen bzw. in dieses integriert, siehe z. B. Süddeutsche Zeitung vom 29. März 2001, Nr. 74, S. 27. Mittels des PLC-Modems kann ein von den Sendern ausgesandtes Sendetelegramm in ein PLC-Netz eingeleitet werden. Dadurch kann ein Regelsystem aufgebaut werden, welches über die PLC-Technik fernsteuerbar ist, z. B. zur Ferndiagnose, -wartung und -steuerung.

Ferner wird ein System zur Überwachung und/oder Steuerung beschrieben aufweisend:
- mindestens einen Sender der genannten Art,
- mindestens eine Einheit zur Anzeige der von dem mindestens einen Sender ausgesandten Daten und/oder zur Steuerung mindestens einer der von dem Sender überwachten Vorrichtungen aufgrund der empfangenen Daten.

Das System kann zur Temperaturüberwachung, insbesondere zur Garraumüberwachung oder Anlagenüberwachung eingesetzt werden.

Bevorzugt wird der Sender oder das System zur Steuerung elektrischer Anlagen eingesetzt. Die vorgestellte Lösung lässt sich sehr kompakt aufbauen, benötigt keinerlei Anschlusskabel und keine Wartung. Somit ist bei der Installation keine Kabelverlegung erforderlich. Da keine Verschleißteile (z. B. Batterien) gewartet werden müssen, kann das Gehäuse der gesamten Anordnung hermetisch dicht verschlossen werden, wodurch auch die Zuverlässigkeit steigt.

Gemäß einer Anwendung wird der Sender oder das System in der Gebäudetechnik, insbesondere in der Installationstechnik oder zur Heizungsregelung verwendet.Gemäß einer weiteren Anwendung wird der Sender oder das System in Haushaltsgeräten, insbesondere in Kochgeschirren, Vorrichtungen zur Überwachung von Garvorgängen, Herden und Kühlschränken eingesetzt. Somit können derartige elektrische Anlagen und Vorrichtungen, in welchen eine thermische Energie zum Betrieb des Senders oder des Systems ausnutzbar ist, aufgrund von Signalen gesteuert werden, welche von dem Sender an eine Steuervorrichtung gesendet wurden.

In den folgenden Ausführungsbeispielen wird schematisch die Arbeitsweise des thermisch gespeisten Senders dargestellt.
Figur 1 zeigt verschiedene Funktionseinheiten eines thermisch gespeisten Senders,
Figur 2 zeigt eine Empfangseinheit,
Figur 3 zeigt einen Temperatursensor unter Verwendung des thermisch speisbaren Senders,
Figur 4 zeigt eine Vorrichtung zur Überwachung einer Lagertemperatur.

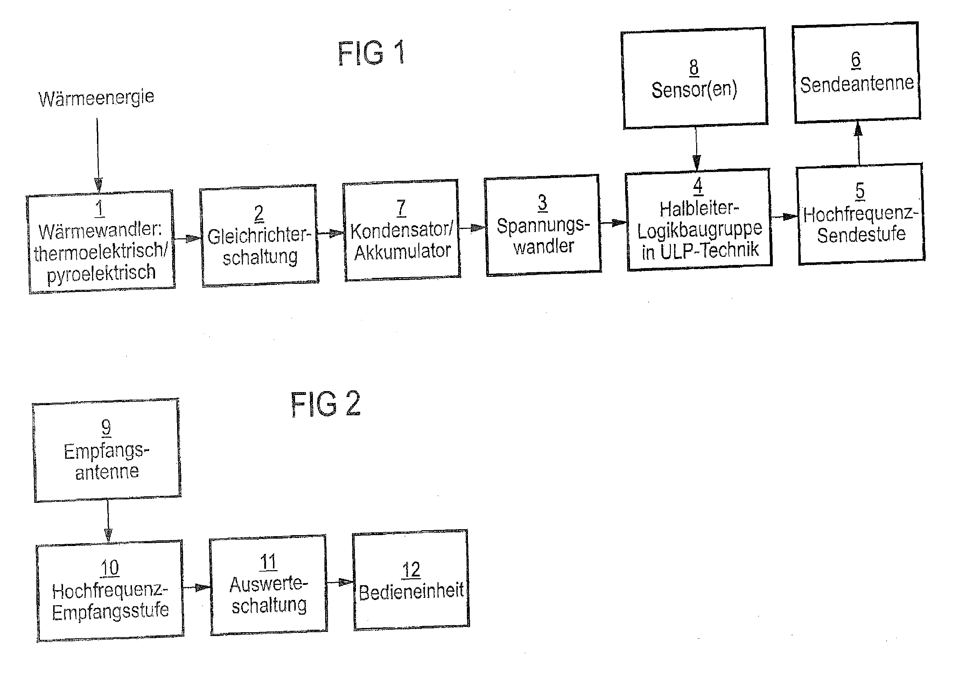

In Figur 1 wird zunächst durch Zufuhr von Wärmeenergie im Wärmewandlerelement 1, vorzugsweise einem thermoelektrischen oder pyroelektrischen Wandler, eine Ladungstrennung und damit eine Spannung erzeugt. Mit dieser Spannung wird über eine Gleichrichterschaltung 2 ein Stromspeicherelement in Form eines Kondensators 7 oder Akkumulators 7 geladen. Ebenso ist auch eine direkte Speisung des Spannungswandlers 3 möglich, wobei beispielsweise das Wärmewandlerelement 1 selbst die Ladungen speichert. Die nachfolgende Spannungswandlung ist vorteilhaft, um aus der exponentiell abfallenden Ladespannung des Kondensators 7 eine über einen kurzen Zeitraum konstante Spannung zu erzeugen.

Mit der Ausgangsspannung des Spannungswandlers 3 werden die nachfolgenden Logikbaugruppe 4 und die Datenübertragungseinheit (hier : Hochfrequenz-Sendestufe 5) aktiviert und versorgt, solange die gespeicherte Energie dies zulässt.

Die Logikbaugruppe 4 enthält eine Mikroprozessor-Ablaufsteuerung, einen Speicher, in dem die Identität des Senders abgelegt ist, und (optional) Sensoreingänge, über die Messwerte einer oder mehrerer angeschlossener Sensoren 8 eingelesen werden können.

Die Hochfrequenz-Sendestufe 5 erzeugt eine hochfrequente Schwingung, die über eine Sendeantenne 6 breitbandig abgestrahlt wird. Dieser Schwingung ist das von der Logikbaugruppe 4 erzeugte Sendetelegramm aufmoduliert.

Steht eine ausreichende Energiemenge zur Verfügung, so wird in diesem Ausführungsbeispiel unter anderem folgender prozessorgesteuerte Ablauf ausgelöst:
a) Auslesen des Identifikationscodes;
b) Auslesen von Messdaten der angeschlossenen Sensoren 8 mit Digitalisierung und/oder Vorverarbeitung der Messwerte;
c) Verschlüsselung der Daten;
d) Generierung eines Sendetelegramms, welches mindestens den Identifikationscode und die Messdaten der Sensoren 8 enthält;
e) Aktivierung bzw. Steuerung der Hochfrequenz-Sendestufe 5;
f) Modulation der hochfrequenten Schwingung mit dem Sendetelegramm (ggf. mehrmals, solange eine Energie ausreichend verfügbar ist oder bis ein anderes Abbruchkriterium erreicht wird).

Selbstverständlich können auch noch weitere Schritte vorgesehen sein. Auch können die Schritte in einer anderen zeitlichen Abfolge durchgeführt werden, z. B. können die Schritte a) und b) und/oder d) und e) vertauscht oder gleichzeitig ausgeführt werden.

Alternativ zur Abstrahlung von Hochfrequenzsignalen können auch andere Arten der Datenübertragung verwendet werden, z. B. optische Überträger, Bluetooth etc.
Figur 2 zeigt eine Empfangsantenne 9 sowie eine Hochfrequenz-Empfangsstufe 10 zum Empfang der von der Sendeantenne 6 abgestrahlten hochfrequenten Schwingung, der das Sendetelegramm aufmoduliert ist. Diese empfangenen Signale werden in einer Auswerteschaltung 11 ausgewertet und gegebenenfalls an eine Bedieneinheit 12 zur Anzeige oder weiteren Verarbeitung weitergeleitet.

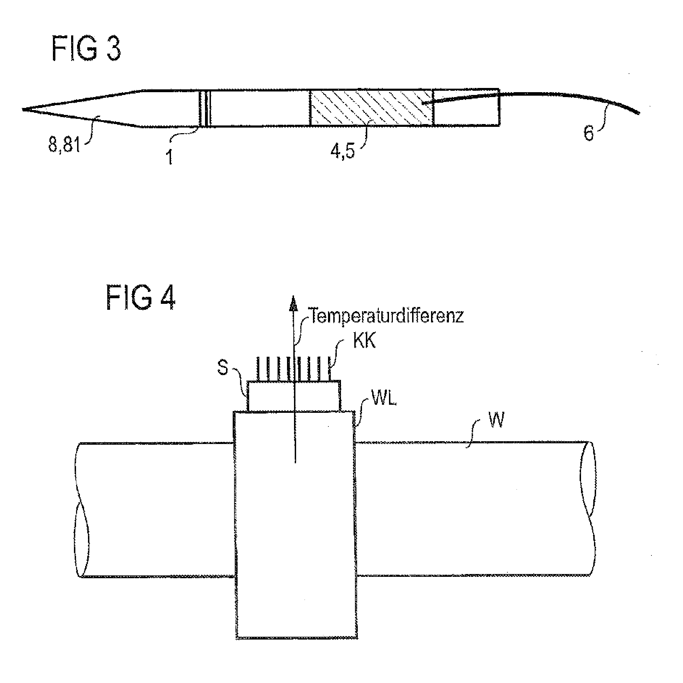

Figur 3 zeigt eine Vorrichtung zur Überwachung eines Garvorgangs.

Garvorgänge von Speisen in Großküchen, Bäckereien und im privaten Haushalt benötigen ein hohes Maß an Beaufsichtigung und das ständige Nachregeln von Heizleistung und anderen Parametern. Durch eine Überwachung der Temperatur und anderen Parametern kann der Garvorgang überwacht werden. So kann der Garvorgang bei geringerer Beaufsichtigung optimal und unter Einsparung an Energie gesteuert werden.

Dazu wurden bisher Programme verwendet, die nach dem Start automatisch ablaufen. Diese haben jedoch die Schwäche, dass Gewicht und Beschaffenheit aller Zutaten und der Garbehälter vorher ermittelt und berücksichtigt werden müssen. Es ist keine Regelung möglich. Ebenfalls sind Lösungen bekannt, bei welchen die Temperatur des Garguts durch einsteckbare drahtgebundene Sensoren (Nachteil des Verbindungskabels) oder durch die Außentemperatur von Garbehältern durch Messung der Wärmestrahlung (Nachteil der indirekten Messung der Garguttemperatur, nur mit speziell beschichteten Töpfen usw. möglich) ermittelt wird. Diese können trotz der genannten Nachteile bereits eine Regelung des Garvorgangs leisten.

Die in diesem Ausführungsbeispiel gezeigte Überwachungsvorrichtung umfasst den oben beschriebenen thermisch speisbaren Sender und kann die relevanten Daten im Gargut oder im Garbehälter ermitteln und dann, z. B. per Funk, aussenden. Die Daten können dann an eine Steuereinrichtung weitergeleitet werden, die den Heizvorgang damit regelt. Ein solches automatisches System zur Regelung von Garvorgängen kann selbstverständlich auch mehrere Garvorgänge gleichzeitig steuern.

Die Überwachungsvorrichtung ist so gestaltet, dass sie unter den beim Garvorgang auftretenden Temperaturen arbeitet. Zum Betrieb der Überwachungsvorrichtung wird die im Garbehälter oder im Gargut verfügbare thermische Energie verwendet.

Die Überwachungsvorrichtung ist sehr flexibel und insbesondere ohne die Verwendung spezieller Garbehälter einsetzbar, da sie direkt in vorhandene Töpfe usw. oder in das Gargut eingebracht werden kann. Die Sendeantenne 6 ist als dünner Draht ausgebildet, der bei Metalltöpfen ein kleines Stück aus dem geschlossenen Deckel herausschaut. Die Überwachungsvorrichtung ist spülmaschinenfest gekapselt und kann wie normales Kochbesteck gehandhabt werden.

Neben dieser universell einsetzbaren Variante ist auch die feste Einbringung der Überwachungsvorrichtung in einem Garbehälter möglich. Dies geschieht vorzugsweise an Positionen, an denen die thermische Belastung der Elektronik sich in Grenzen hält und die gleichzeitig einen ausreichenden thermischen Gradienten zur Verfügung stellen. Neben einer reinen Temperatursensorik können, insbesondere bei festem Einbau, auch Sensoren 8 zur Feststellung von Feuchtigkeit, Füllstand und Leitwert vorhanden sein.

Das Empfangssystem empfängt die vom Gargutsensor ausgesandten Sendetelegramme, steuert den Garvorgang (z. B. durch Einstellung der Temperatur der Kochplatte) und/oder zeigt ihn an (z. B. die verbleibende Kochzeit).

Figur 4 zeigt in Seitenansicht eine Vorrichtung zur Überwachung einer Lagertemperatur.

Eine Temperaturüberwachung ist in vielerlei Anwendungsgebieten erforderlich, um eine Betriebsfähigkeit zu überwachen und im Falle einer zu hohen oder zu tiefen Temperatur eine entsprechende Reaktion auszulösen, um zum Beispiel eine vorbeugende Anlagenwartung oder Diagnose von Verschleißverlauf u. ä. zu ermöglichen.

Bei einer Ausstattung des zu überwachenden Teils mit einem Temperatursensor, der über ein Kabel mit einer zentralen Signalverarbeitung verbunden ist, ergibt sich ein erheblicher Aufwand für die Kabelverlegung und deren Konzipierung. Zudem wären dann viele Anlagenteile nicht (oder nur mit großem Aufwand) überwachbar, da aufgrund ihrer Bewegung ein Kabelanschluss nicht möglich oder erschwert ist.

In diesem Ausführungsbeispiel zur Überwachung der Lagertemperatur ist die Vorrichtung an einer Welle W über ein Wellenlager WL angebracht, bei dem ein thermisch speisbarer Sender S mit mindestens einem Sensor 8 in Form eines Temperatursensors vorhanden ist. Der Temperatursensor kann am oder im Wellenlager WL angebracht sein. Die Datenübertragung erfolgt über Funk. Die vorgestellte Lösung lässt sich sehr kompakt aufbauen, benötigt keinerlei Anschlusskabel und keine Wartung. Da keine Verschleißteile (z. B. Batterien) gewartet werden müssen, kann das Gehäuse der gesamten Anordnung hermetisch dicht verschlossen werden, wodurch auch die Zuverlässigkeit steigt. Schließlich ist bei der Installation keine Kabelverlegung erforderlich, sondern es ist lediglich der Anlagensteuerung mitzuteilen, dass ein neuer Temperaturüberwachungspunkt eingebaut wurde.

In diesem Ausführungsbeispiel ist das Wärmewandlerelement 1 ein Thermowandler, bei dem bevorzugt seine eine Seite mit dem zu überwachenden Anlagenteil verbunden ist, während seine andere Seite mit einer Stelle verbunden ist, die (z. B. im Falle einer Übertemperatur des zu überwachenden Anlagenteils) vergleichsweise kühler ist. Dies ist typischerweise ein Kühlkörper KK oder das Gehäuse. Da die erzeugten Spannungen relativ klein sind, setzt sich der Thermowandler günstigerweise Weise aus einer Reihenschaltung und/oder einer Parallelschaltung vieler thermoelektrischer Generatorelemente zusammen.

Die Logikbaugruppe 4 überwacht den Messwert des Temperatursensors 81 auf Überschreitung eines (evtl. voreingestellten) Grenzwertes TGRENZ. Wird TGRENZ über und/oder unterschritten, so wird von der Logikbaugruppe 4 ein Sendetelegramm generiert und über die Datenübertragungseinheit 5,6 an eine Anlagensteuerung gesendet, die dazu mit einem entsprechenden Funkempfänger 9,10 ausgestattet ist. Gemäß Figur 2 weist der Funkempfänger 9, 10 eine Empfangsantenne 9 sowie eine Hochfrequenz-Empfangsstufe 10 auf. Dieses Sendetelegramm kann die Temperatur T an der Messstelle, aber auch z. B. einen Identifikationscode und/oder zusätzliche Informationen enthalten. Unabhängig davon kann der Verlauf der Temperatur T in der Logikbaugruppe 4 optional dauerhaft gespeichert werden, um z. B. für Diagnosezwecke nach einer Anlagenstörung zur Verfügung zu stehen.

Dies kann ein einmaliger Vorgang sein, oder die Aussendung erfolgt zyklisch solange, wie auch die Temperaturüberschreitung vorliegt. Zusätzlich kann auch eine Meldung bei Erreichen bzw. Unterschreiten des Grenzwertes ausgesandt werden, oder es kann z. B. die Zeit seit dem Überschreiten des Grenzwertes im Sendetelegramm enthalten sein. Schließlich ist auch die Verwendung mehrerer Grenzwerte möglich, z. B. für Vorwarnung, Alarm und Anlagenabschaltung.

Insbesondere ist es vorteilhaft, mindestens einen Sensor 8 zu verwenden, bei dem schon geringe Energiemengen einen Messwert ändern können. Dadurch ist es möglich, eine Zustandsänderung zu detektieren, deren Energieübertrag für den Betrieb des Senders zu gering ist. Günstigerweise ist der Sensor 8 ein akkumulierender Sensor, bei dem durch den Energieübertrag ein über die Zeit integrierender Messwert detektiert wird. Beispielsweise kann ein Temperaturverlauf in einem nichtflüchtigen Speicher als Sensor 8 festgehalten werden, der Speicher ist bevorzugt in Form eines extrem energiearmen EEPROM-Speicher ausgebildet. Auch analoge Speichermethoden wie z. B.: ein Entladen mindestens eines Kondensators oder ein Verdampfen durch Temperatureinfluss, das Entladen von Elektretwerkstoffen durch radioaktive Strahlung (akkumulierte Strahlenbelastung), elektrochemische Reaktionen wie Hydrolyse, magnetische Speichermethoden etc. können zur (meist integrierenden) Speicherung von Temperatureinflüssen und anderen Messgrößen Verwendung finden.

Sobald dann eine größere Energiemenge, z. B. durch ein hinreichend starkes Temperaturgefälle oder durch externe Energiezuführung (z. B. über ein Hochfrequenzfeld), zur Verfügung steht, wird die gesamte Temperaturhistorie oder ein Teil davon oder der akkumulierte Messwert per Funk abgesendet.

Allgemein ist es vorteilhaft, wenn der Sender als eigenes Bauteil oder z. B. in die Logikbaugruppe integriert eine Überwachungseinheit, z. B. einen Schwellwertschalter, aufweist, der mit Überschreiten einer bestimmten ausreichenden Energiemenge den Sendevorgang auslöst.

## Patentansprüche

1. Thermisch speisbarer Sender, aufweisend
- mindestens ein Wärmewandlerelement (1) mit einem nachgeschalteten Spannungswandler (3),
- eine mit dem Spannungswandler (3) verbundene Logikbaugruppe (4) mit einer Ablaufsteuerung,
- eine Datenübertragungseinheit (5, 6), die mit der Logikbaugruppe (4) verbunden ist,
**dadurch gekennzeichnet, dass**
die Logikbaugruppe (4) in ULP-Bauweise ausgeführt ist und die Datenübertragungseinheit (5,6) ein breitbandiges Signal abstrahlt.

2. Sender nach Anspruch 1, bei dem die Logikbaugruppe (4) in ULP-Bauweise eine Leistungsaufnahme von weniger als 10 mW aufweist.

3. Sender nach einem der Ansprüche 1 oder 2, bei dem die Bandbreite des breitbandigen Signals mehr als 100 kHz beträgt, insbesondere zwischen 300 kHz und 600 kHz.

4. Sender nach einem der Ansprüche 1 bis 3, bei dem mindestens ein Wärmewandlerelement (1) ein Thermowandler ist, mittels dessen Wärmeenergie in elektrische Energie nach dem thermoelektrischen Prinzip umwandelbar ist.

5. Sender nach einem der Ansprüche 1 bis 4, bei dem mindestens ein Wärmewandlerelement (1) ein Pyrowandler ist, mittels dessen Wärmeenergie in elektrische Energie nach dem pyroelektrischen Prinzip umwandelbar ist.

6. Sender nach einem der Ansprüche 1 bis 5, bei dem zur zusätzlichen Stromversorgung eine Solarzelle vorhanden ist.

7. Sender nach einem der Ansprüche 1 bis 6, bei dem die Logikbaugruppe (4) mit mindestens einem Sensor (8) verbunden ist.

8. Sender nach Anspruch 7, wobei der Sensor (8) ein Temperatursensor, Kraftsensor, Zählerstandssensor, Schalterzustandssensor oder eine Kombination davon ist.

9. Sender nach einem der Ansprüche 1 bis 8, bei dem die Datenübertragungseinheit (5, 6) eine Sendestufe (5) aufweist, die eine Hochfrequenzsendestufe ist und mittels der ein Hochfrequenzsignal mit einer Frequenz (f) größer als 1 MHz, insbesondere mit einer Frequenz (f) zwischen 100 MHz und 30 GHz, sendbar ist.

10. Sender nach einem der Ansprüche 1 bis 9, bei dem die Logikbaugruppe (4) mit einem Speicher verbunden ist, in dem ein Identifikationscode gespeichert ist.

11. System zur Überwachung und/oder Steuerung, aufweisend
- mindestens einen Sender nach einem der Ansprüche 1 bis 10,
- mindestens eine Einheit zur Anzeige der von dem mindestens einen Sender ausgesandten Daten und/oder zur Steuerung mindestens einer der von dem Sender überwachten Vorrichtungen aufgrund der empfangenen Daten.

12. Verwendung eines Senders nach einem der Ansprüche 1 bis 10 oder eines Systems nach Anspruch 11 zur Steuerung elektrischer Anlagen.

13. Verwendung nach Anspruch 12 in der Gebäudetechnik, insbesondere in der Installationstechnik oder zur Heizungsregelung.

14. Verwendung nach Anspruch 13 zur Erfassung einer Heizkostenverteilung.

15. Verwendung nach Anspruch 12 in Haushaltsgeräten, insbesondere in Kochgeschirren, Vorrichtungen zur Überwachung von Garvorgängen, Herden und Kühlschränken.

16. Verwendung in Vorrichtungen zur Überwachung von Garvorgängen nach Anspruch 15, wobei der Sender in ein Gargut oder einen Garbehälter eingebracht ist und dazu eingerichtet ist, über die thermische Energie im Gargut oder Garbehälter betrieben zu werden, relevante Daten zu erfassen und per Funk an eine Einheit zur Steuerung einer Vorrichtung zu versenden.
